# EUROPEAN PATENT APPLICATION

(11) **EP 4 741 909 A1**
(43) Date of publication of application: **13.05.2026**
(21) Application number: 23947692.2
(22) Date of filing: 02.08.2023
(51) Int. Cl.: G02B 27/01, G02B 27/09, G02B 3/08

(54) **ELECTRONIC DEVICE**

(71) Applicant: LG Electronics Inc., Yeongdeungpo-gu Seoul 07336 (KR)
(72) Inventor: JU, Yeongyeong, Seoul 06772 (KR); SHIN, Sungchul, Seoul 06772 (KR); JEONG, Moongi, Seoul 06772 (KR); KIM, Dongwook, Seoul 06772 (KR); KIM, Taeho, Seoul 06772 (KR)
(74) Representative: Schott, Jakob Valentin
(86) International application number: PCT/KR2023/011284
(87) International publication number: WO 2025/028687

(57) **Abstract**

The present disclosure may provide an electronic device that is thinner than conventional devices and does not require a lens for vision correction, the electronic device including a display panel for displaying an image, a pinhole array having a plurality of pinholes, and a lens array having a plurality of optical elements corresponding to the plurality of pinholes for magnifying an image passing through each pinhole.

## Description

### [Technical Field]

The present disclosure relates to an electronic device, and more particularly, to an electronic device such as a wearable display used in Virtual Reality (VR), Augmented Reality (AR), Mixed Reality (MR), and the like.

### [Background]

Virtual reality (VR) refers to a specific environment, situation, or technology itself that is similar to reality created by artificial technology using computers or the like, but is not real.

Augmented Reality (AR) refers to a technology that synthesizes virtual objects or information in a real environment and makes them look like objects existing in an original environment.

Mixed reality (MR) or hybrid reality refers to creating a new environment or new information by combining a virtual world and a real world. In particular, it is called mixed reality when it refers to something that can interact in real time between real and virtual things.

In this case, the created virtual environment, situation, or the like stimulates user's five senses and allows them to freely enter and exit the boundary between reality and imagination by allowing them to experience space and time similar to the real thing. In addition, users may not only simply immerse themselves in this environment, but also interact with things implemented in this environment, such as manipulating or issuing commands using a real device.

Recently, research on equipment (gear) used in such technical fields is being actively conducted.

Wearable displays producing an image in the air are generally divided into two types. That is, there are a helmet-type wearable display worn on a user's head and a glasses-type wearable display. A helmet-type wearable display has a structure in which an optical lens system has an increased volume so as to produce a large image through an expanded field of view (FOV) and is mounted on a user's head, and is thus referred to as a head mounted display (HMD). Therefore, the helmet-type wearable display is used in professional fields requiring a restricted space with little motion, such as military training (cyber flight training) and cyber games.

On the other hand, the glasses-type wearable display has a viewing structure worn over nose and ears like a glasses structure, and is in a compact form that is lightweight and small in size so as to be easily used even in a mobile environment.

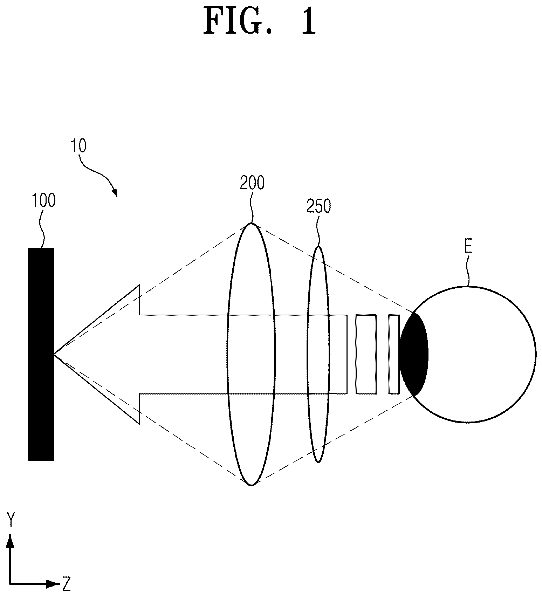

A wearable display 10, as shown in FIG. 1, may be formed in a direct-view structure in which a panel and a lens are mounted in front of a user's eye (or pupil) E. That is, the wearable display 10 having the direct-view structure may include a display panel 100, a virtual image generating lens (or lens group) 200, and a vision correcting lens 250.

The display panel 100 may generate an image viewable by the user of the wearable display 10.

The virtual image generating lens 200 enlarges the generated image, so that the user may view the generated image as a virtual image. The virtual image may appear to be about 1m to 3m away from the user.

The vision correcting lens 250 corrects for a user's refractive error (e.g., myopia, hyperopia, and the like), so that the image may be clearly viewed.

In order for the virtual image generating lens 200 to generate the virtual image, a predetermined separation distance between the virtual image generating lens 200 and the display panel 100 is required. The separation distance may be a distance similar to a focal length of the lens. The separation distance may have a significant influence on a thickness (in a Z direction) of the wearable display 10. That is, the separation distance being great may mean that the thickness of the wearable display 10 is inevitably increased.

In order to reduce the separation distance while maintaining an optical path length between the virtual image generating lens 200 and the display panel 100, it may be considered that a pancake lens (or lens group) is disposed between the virtual image generating lens 200 and the display panel 100. Even when the pancake lens is disposed, the separation distance may only be reduced to about one-half or one-third, so that there is a limit to reducing the thickness of the wearable display 10. In addition, the pancake lens inevitably lowers light efficiency. In addition, the provision of the pancake lens may increase a manufacturing cost of the wearable display 10.

In one example, the vision correcting lens 250 itself may be a factor that increases the thickness of the wearable display 10. In addition, because eyesight may be different for each user, there is an inconvenience of having to purchase a vision correcting lens suitable for each user.

### [Summary]

### [Technical Problem]

The present disclosure is proposed to solve the above-described problems and various problems related thereto, and a technical purpose of the present disclosure is to provide an electronic device such as a wearable display that is thinner compared to existing devices and does not require a vision correcting lens.

### [Technical Solutions]

To achieve the technical purpose as described above, according to an aspect of the present disclosure, provided is an electronic device comprising: a display panel that displays an image; a pinhole array comprising a plurality of pinholes; and a lens array comprising a plurality of optical elements respectively corresponding to the plurality of pinholes and for enlarging the image passing through each pinhole.

The plurality of pinholes and the plurality of optical elements may correspond to each other in a ratio of 1:1, N:1, or 1:N.

Each of the plurality of optical elements may be equipped as one of a general lens, a Fresnel lens, and a diffractive element.

The electronic device may further include an optical path correcting lens for correcting an optical path of the image toward a user's eye in a horizontal direction.

The optical path correcting lens may be equipped as one of a general lens, a Fresnel lens, and a diffractive element.

The optical path correcting lens may be disposed between the lens array and the pinhole array.

The pinhole array may be disposed between the lens array and the optical path correcting lens.

The lens array may be disposed between the pinhole array and the optical path correcting lens.

The pinhole array and one surface of the lens array facing the pinhole array may be formed as curved surfaces.

An opposite surface of the lens array may be formed as a plane.

The lens array and the optical path correcting lens may be integrated to constitute an optical path correcting lens array.

The optical path correcting lens array may comprise a lens body and the plurality of optical elements protruding from one surface of the lens body, and each of the plurality of protruding optical elements may be inserted into each one of the plurality of pinholes.

An opposite surface of the lens body may form a curved surface.

The lens array may comprise a pancake lens layer that allows a light beam of the image to be reflected therein in a reciprocating manner and to be transmitted therethrough using a polarization principle.

Among both surfaces of the lens array, the pancake lens layer may be disposed on one surface facing the display panel.

Each of the plurality of pinholes may have a circular or polygonal planar shape.

A separation distance between pinholes adjacent to each other may increase from a center toward a periphery of the pinhole array.

The plurality of pinholes may be distributed in one of a lattice pattern, a diamond pattern, and a circular pattern.

An aperture of each of the plurality of pinholes may be equal to or greater than 400µm.

A separation distance between the pinhole array and the display panel may be smaller than 40mm.

### [Advantageous Effects]

Effects of the electronic device according to the present disclosure will be described as follows.

According to at least one of several aspects of the present disclosure, the electronic device having a smaller thickness than existing products may be implemented.

According to at least one of several aspects of the present disclosure, the electronic device providing the wider field of view (FOV) than existing products may be implemented.

In addition, according to at least one of several aspects of the present disclosure, the electronic device capable of implementing the wearable display that allows the user to clearly view the image without the vision correcting lens may be implemented.

### [Brief Description of the Drawings]

FIG. 1 illustrates an example of a wearable display having a direct-view structure.
FIG. 2 is a side cross-sectional view of an electronic device according to an aspect of the present disclosure.
FIG. 3 illustrates a plan view of a pinhole array of an electronic device according to an aspect of the present disclosure.
FIG. 4 illustrates a pinhole array of an electronic device according to an aspect of the present disclosure.
FIGS. 5 to 7 are side cross-sectional views of electronic devices according to respective aspects of the present disclosure.
FIG. 8 illustrates a pinhole array and a lens array of an electronic device in FIG. 6.
FIG. 9 illustrates a variation of a pinhole array and a lens array in FIG. 8.
FIG. 10 is a side cross-sectional view of an electronic device according to an aspect of the present disclosure.
FIG. 11 is a partial side cross-sectional view of an electronic device according to an aspect of the present disclosure.
FIG. 12 is a side cross-sectional view of an electronic device according to an aspect of the present disclosure.
FIG. 13 is a partial side cross-sectional view of an electronic device according to an aspect of the present disclosure.
FIGS. 14 to 19 are side cross-sectional views of electronic devices according to respective aspects of the present disclosure.

### [Best Mode]

Description will now be given in detail according to exemplary embodiments disclosed herein, with reference to the accompanying drawings. For the sake of brief description with reference to the drawings, the same or equivalent components may be provided with the same reference numbers, and description thereof will not be repeated. In general, a suffix such as "module" and "unit" may be used to refer to elements or components. Use of such a suffix herein is merely intended to facilitate description of the specification, and the suffix itself is not intended to give any special meaning or function. In the present disclosure, that which is well-known to one of ordinary skill in the relevant art has generally been omitted for the sake of brevity. The accompanying drawings are used to help easily understand various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are generally only used to distinguish one element from another.

It will be understood that when an element is referred to as being "connected with" another element, the element can be directly connected with the other element or intervening elements may also be present. In contrast, when an element is referred to as being "directly connected with" another element, there are no intervening elements present.

A singular representation may include a plural representation unless it represents a definitely different meaning from the context.

Terms such as "include" or "has" are used herein and should be understood that they are intended to indicate an existence of several components, functions or steps, disclosed in the specification, and it is also understood that greater or fewer components, functions, or steps may likewise be utilized.

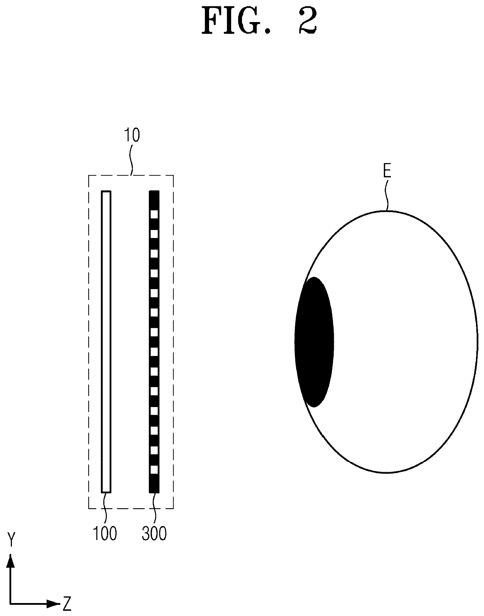

Hereinafter, a direct-view-type electronic device including a pinhole array will be described with reference to FIG. 2. FIG. 2 is a side cross-sectional view of an electronic device according to an aspect of the present disclosure.

As shown in FIG. 2, the electronic device 10 may include the display panel 100 and a pinhole array 300. The user of the electronic device 10 may view the image output from the display panel 100 through the pinhole array 300.

In addition to the above components, the electronic device 10 may include other components. Examples of other components may include a user input unit for receiving a user input, storage for storing software for driving or the like, a communication unit for being in communication with an external device, a controller that controls various electronic components disposed in the electronic device 10, and the like. However, because said other components are not main focus of the present disclosure, a detailed description thereof will be omitted. The same applies to the electronic device 10 to be described below.

The display panel 100 may generate the image viewable by the user of the wearable display 10. The display panel 100 may include a liquid crystal on silicon (LCoS) element, a liquid crystal display (LCD) element, an organic light emitting diode (OLED) element, and a digital micromirror device (DMD), and may also include a next-generation display element such as a micro light emitting diode (LED), a quantum dot (QD) LED, and the like.

The pinhole array 300, as a kind of optical array, may be understood as an array in which a plurality of pinholes 315 for light transmission are defined in a predetermined pattern in a light blocking layer.

The image generated by the display panel 100 may be viewed through each pinhole of the pinhole array 300. The user may view the image based on a pinhole effect. The term "pinhole" originates from an opening for viewing an object resembling a hole made with a pin, and the pinhole effect refers to a phenomenon in which light that has passed through a small hole is more clearly visible because of a greater depth of field (DOF).

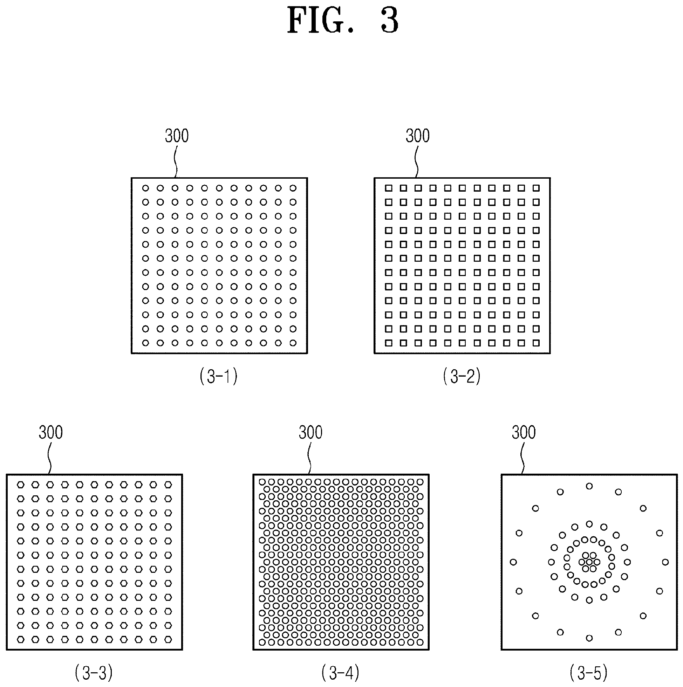

The pinhole array will be described with further reference to FIG. 3. FIG. 3 illustrates a plan view of a pinhole array of an electronic device according to an aspect of the present disclosure.

As shown in FIG. 3, the pinhole array 300 may include the light blocking layer and the plurality of pinholes defined in the light blocking layer to transmit light based on the predetermined pattern.

A light source for the pinhole array 300 may have a wavelength band of a visible light range, and may range from a laser light source having a narrow wavelength bandwidth to a natural light source having a wide wavelength bandwidth. A medium through which light passes in the pinhole may be a transmissive material such as glass or plastic, in addition to air (transmittance n=1).

It is illustrated in (3-1), (3-2), and (3-3) in FIG. 3 that the plurality of pinholes are uniformly distributed in the pinhole array 300. Each pinhole may be circular as shown in (3-1) in FIG. 3, may be rectangular as shown in (3-2) in FIG. 3, or may be hexagonal as shown in (3-3) in FIG. 3. The planar shape of each pinhole is not limited to the above-described shapes, and may be other shapes, for example, pentagonal.

It is illustrated in (3-1), (3-2), and (3-3) in FIG. 3 that the plurality of pinholes are distributed based on a lattice pattern. However, the present disclosure is not limited thereto. As shown in (3-4) in FIG. 3, the plurality of pinholes may be distributed in various patterns such as a diamond pattern or a zigzag pattern.

In one example, as shown in (3-5) in FIG. 3, the plurality of pinholes may be distributed such that they are most concentrated at a center of the pinhole array 300 and become less concentrated toward a periphery of the pinhole array 300. The plurality of pinholes may be distributed in a circular pattern in a radial direction. A separation distance between pinholes adjacent to each other may increase from the center of the pinhole array 300 toward the periphery thereof. As described above, even when the plurality of pinholes are distributed as such, the planar shape of each pinhole may be circular or polygonal. In this case, the pinhole array 300 may provide a wider field of view to the user.

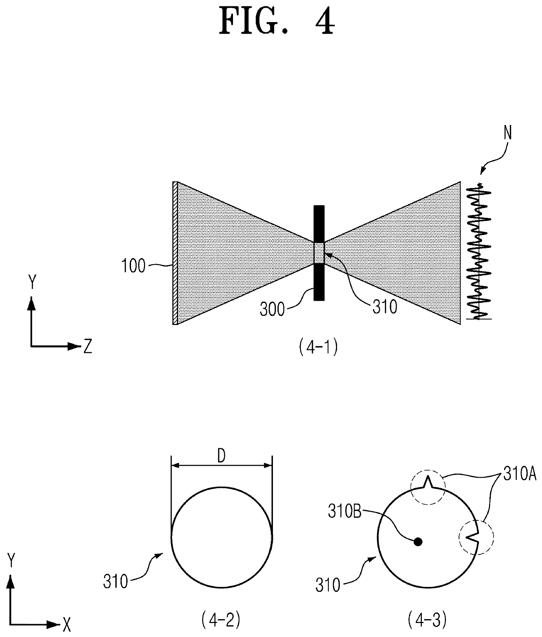

As an aperture of the individual pinhole of the pinhole array 300 decreases, the pinhole effect may be further increased. However, as the aperture of the individual pinhole of the pinhole array 300 decreases, noise may be generated in the image viewed through the pinhole array 300. This will be described with further reference to FIG. 4. FIG. 4 illustrates a pinhole array of an electronic device according to an aspect of the present disclosure.

As shown in (4-1) in FIG. 4, when the image output from the display panel 100 passes through the pinhole 310, noise N may be generated depending on characteristics of the pinhole 310.

The planar shape (e.g., the circular shape or the like) of the pinhole 310 needs to be geometrically perfect, as shown in (4-2) in FIG. 4. The aperture of the pinhole 310 is indicated by D.

However, when the pinhole array 300 is actually manufactured, the planar shape of the pinhole 310 may not be geometrically perfect, as shown in (4-3) in FIG. 4. That is, an edge of the pinhole 310 may have a fine irregularity 310A, and the noise N may be caused due to diffraction resulted therefrom. In addition, an unintended impurity 315B may be present in an opening of the pinhole 310, and the noise N may be caused due to diffraction resulted therefrom. This is especially true when the aperture of each pinhole is small. Therefore, it is preferable that the aperture of each pinhole is equal to or greater than 400µm.

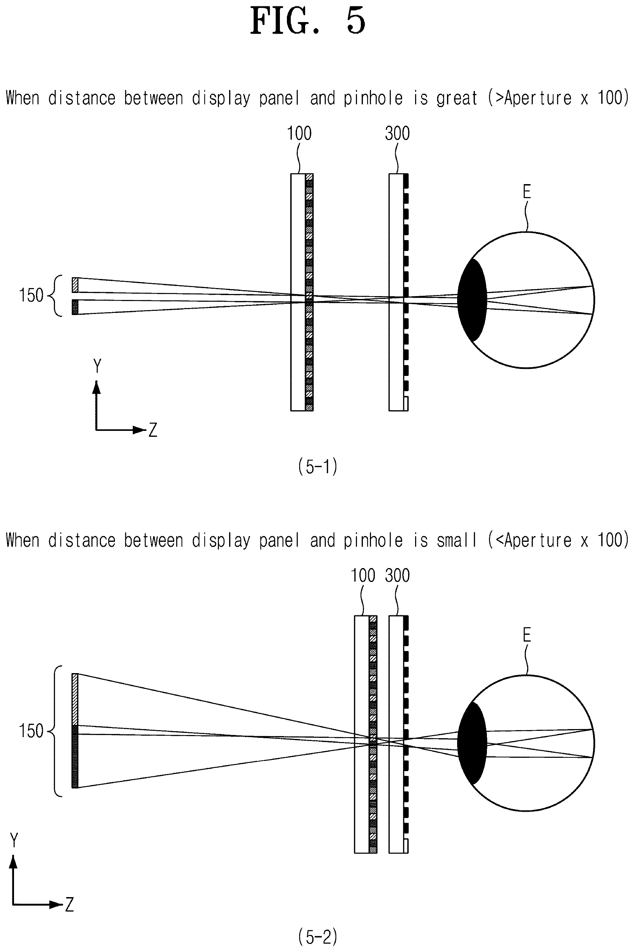

In one example, in order to maintain the pinhole effect, a separation distance between the display panel 100 and the pinhole array 300 needs to be equal to or greater than a predetermined distance compared to the aperture of each pinhole. That is, the separation distance needs to be at least 100 times the aperture of each pinhole. This will be described with further reference to FIG. 5. FIG. 5 is a side cross-sectional view of an electronic device according to an aspect of the present disclosure.

As shown in (5-1) in FIG. 5, when the separation distance between the display panel 100 and the pinhole array (or pinhole) 300 is sufficiently great (e.g., 100 times or greater the aperture of each pinhole), light output from the display panel 100 and reaching the user's eye (or retina) E is focused to substantially a single point. That is, a virtual image 150 visible to the user may become clear.

However, as shown in (5-2) in FIG. 5, when the separation distance between the display panel 100 and the pinhole array (or pinhole) 300 is not sufficient (e.g., smaller than 100 times the aperture of each pinhole), an area of light output from the display panel 100 and reaching and being focused on the user's eye (or retina) E may increase. That is, blur may occur in the virtual image 150 visible to the user.

In summary, the depth of field of light passing through the pinhole 310 increases in inverse proportion to the aperture D of the pinhole 310. However, the noise N becomes clearer and more pronounced as the aperture D of the pinhole 310 becomes smaller.

Accordingly, when the aperture D of the pinhole 310 is increased, the noise N may be reduced, but the depth of field of the pinhole 310 may be decreased, and thus, the effect of the pinhole 310 may be reduced. Therefore, in order to make the image output from the display panel 100 clearly visible, the spacing between the pinhole array 300 and the display panel 100 should be widened. When the aperture of each pinhole is equal to or greater than 400µm, the distance between the display panel 100 and the pinhole array 300 may be equal to or greater than 40mm. The distance between the display panel 100 and the pinhole array 300 being great may mean an increase in the thickness of the electronic device 10.

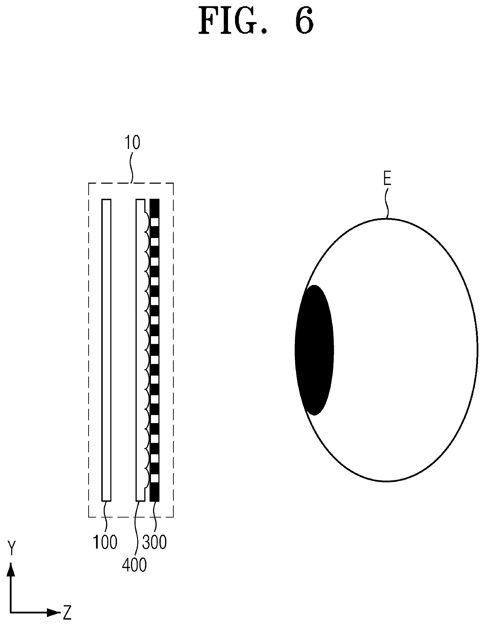

Hereinafter, an electronic device capable of narrowing the spacing between the pinhole array 300 and the display panel 100 while including the pinhole 310 having an aperture with a size enough to reduce a level of the noise caused by the pinhole as described above to a predetermined level or lower will be described with further reference to FIG. 6. FIG. 6 is a side cross-sectional view of an electronic device according to an aspect of the present disclosure.

As shown in FIG. 6, the electronic device 10 may include the display panel 100, the pinhole array 300, and a lens array 400. The user of the electronic device 10 may view the image output from the display panel 100 through the pinhole array 300 and the lens array 400.

The display panel 100 is for generating the image viewable by the user of the wearable display 10, which is as described above, so that a detailed description thereof will be omitted.

The pinhole array 300 is for the pinhole effect, which is as described above, so that a detailed description thereof will be omitted.

The lens array 400 may include a plurality of lenses (e.g., micro lenses) distributed to correspond to optical paths passing through the plurality of pinholes of the pinhole array 300, respectively. The lens array 400 enlarges the image passing through each pinhole, so that even when the spacing between the pinhole array 300 and the display panel 100 is smaller than that when the lens array 400 is not included, the image may be clearly visible to the user. Each of the plurality of lenses may be understood as a kind of optical element.

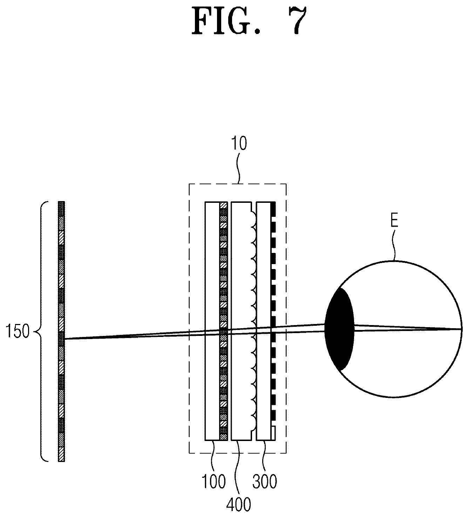

The image viewed by the user through the electronic device 10 configured as described above will be described with further reference to FIG. 7. FIG. 7 is a side cross-sectional view of an electronic device according to an aspect of the present disclosure.

Each lens of the lens array 400 may push the image output through the display panel 100 far away, so that the image may be clearly viewed even when the separation spacing between the display panel 100 and the pinhole array 300 is small. A focal length of each lens may be smaller than the separation spacing between the display panel 100 and the pinhole array 300.

When the aperture of each pinhole is equal to or greater than 400µm, the distance between the display panel 100 and the pinhole array 300 may be smaller than 40mm thanks to the lens array.

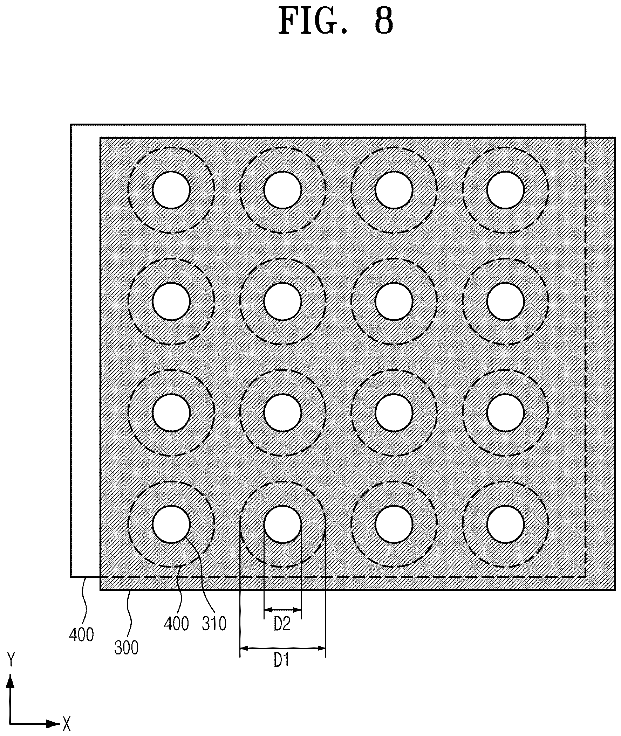

An arrangement relationship between the plurality of pinholes of the pinhole array 300 and the plurality of lenses of the lens array 400 will be described with further reference to FIG. 8. FIG. 8 illustrates a pinhole array and a lens array of an electronic device in FIG. 6.

The plurality of lenses may be arranged in the lens array 400 such that each lens 410 of the lens array 400 corresponds to each pinhole 310 of the pinhole array 300 in a 1:1 ratio. An aperture D1 of each lens may be greater than an aperture D2 of each pinhole 310. Each lens 410 may be arranged in the lens array 400 such that a center thereof corresponds to a path of a light beam passing through each pinhole 310.

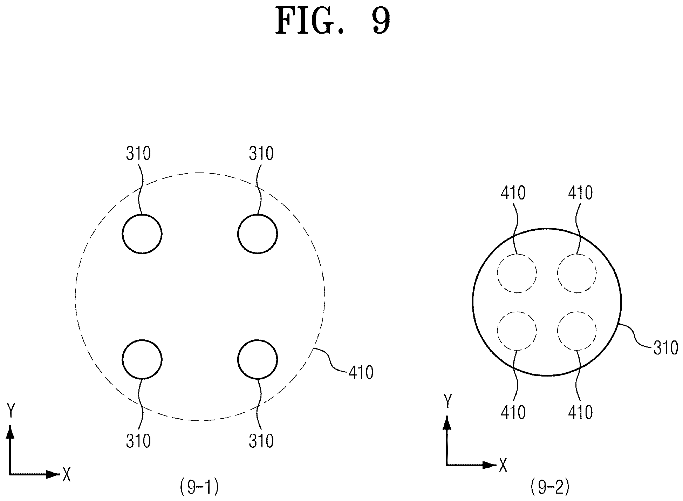

Each lens 410 of the lens array 400 does not have to correspond to each pinhole 310 of the pinhole array 300 in the 1:1 ratio. This will be described with further reference to FIG. 9. FIG. 9 illustrates a variation of the pinhole array and the lens array in FIG. 8.

As shown in (9-1) in FIG. 9, the plurality of lenses may be arranged in the lens array 400 such that N (N>1) pinholes 310 correspond to one lens 410.

Alternatively, as shown in (9-2) in FIG. 9, the plurality of lenses may be arranged in the lens array 400 such that N (N>1) lenses 410 correspond to one pinhole 310.

A relationship between the pinhole array 300 (in particular, the plurality of pinholes 310) and the lens array 400 (in particular, the plurality of lenses 410) described in FIGS. 8 and 9 may also be applied to the electronic device 10 to be described below.

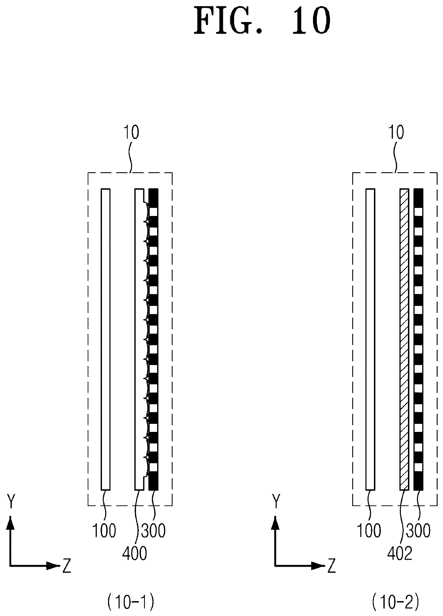

A general lens (e.g., a general convex lens) may be used as each lens 410 of the lens array 400. However, in order to reduce the thickness of the electronic device 10, a lens other than the general lens may be used. This will be described with further reference to FIG. 10. FIG. 10 is a side cross-sectional view of an electronic device according to an aspect of the present disclosure.

As shown in (10-1) in FIG. 10, instead of the lens array 400 in which the general lens is used as the lens 410, a lens array 401 in which a Fresnel lens is used as the lens 410 may be used.

Alternatively, as shown in (10-2) in FIG. 10, instead of the lens array 400 in which the general lens is used as the lens 410, a lens array 402 in which a diffractive element serving as a lens such as a differential optical element (DOE), a holographic optical element (HOE), or a meta lens is used as the lens 410 may be used. In this case, an eye motion box (EMB) may be widened.

The Fresnel lens and the diffractive element may be understood as kinds of optical element.

A relationship between the Fresnel lens or the diffractive element and the pinhole may be as described above. The use of the Fresnel lens or the diffractive element instead of the general lens may also be applied to the electronic device 10 described below.

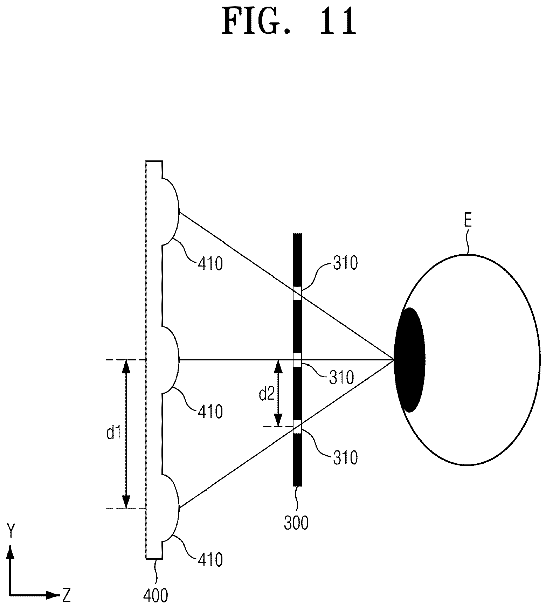

When the pinhole array 300 and the lens array 400 described with reference to FIGS. 6 to 8 are arranged, the lens array 400 may need to be wider than the pinhole array 300. This may act as a factor that increases a planar area (i.e., a planar area based on an X direction and a Y direction) of the electronic device 10. This will be described in more detail with reference to FIG. 11. FIG. 11 is a partial side cross-sectional view of an electronic device according to an aspect of the present disclosure.

As shown in FIG. 11, the plurality of lenses 410 may correspond to the plurality of pinholes 310, respectively. That is, each lens 410 may be aligned with each pinhole 310 in a radial direction from the user's eye E toward the display 100. This is to provide a wide field of view to the user. The light beam passing through each lens 410 may reach the user's eye E via each pinhole 310.

Therefore, based on the radiation direction, a first spacing d1 between the lenses 410 adjacent to each other may be greater than a second spacing d2 between the pinholes 310 adjacent to each other, and a size of the display panel 100 may also need to be increased in proportion to a first difference Δ1 between the first spacing d1 and the second spacing d2. This may act as the factor that increases the planar area (i.e., the planar area based on the X direction and the Y direction) of the electronic device 10.

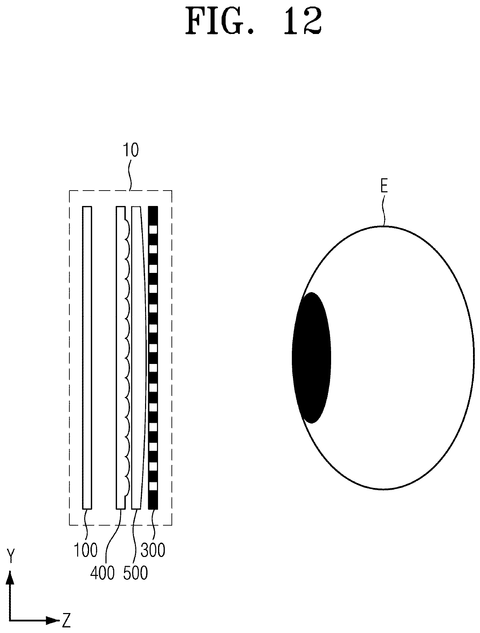

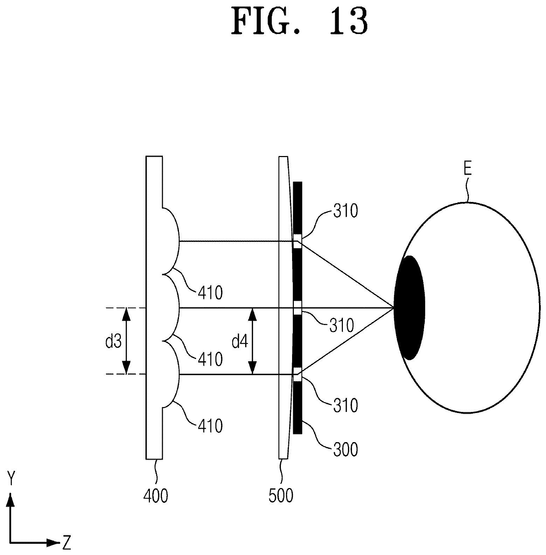

A method for solving this problem will be described with further reference to FIGS. 12 and 13. FIG. 12 is a side cross-sectional view of an electronic device according to an aspect of the present disclosure, and FIG. 13 is a partial side cross-sectional view of an electronic device according to an aspect of the present disclosure.

As shown in FIG. 12, the electronic device 10 may include the display panel 100, the pinhole array 300, the lens array 400, and an optical path correcting lens 500.

Because the display 100, the pinhole array 300, and the lens array 400 are the same as described above, a detailed description thereof will be omitted. The optical path correcting lens 500 will be described with further reference to FIG. 13.

As shown in FIG. 13, the optical path correcting lens 500 may serve to correct an optical path in the radial direction from each pinhole 310 to each lens 410 into an optical path in a horizontal direction. Even when each lens 410 is aligned with each pinhole 310 in the horizontal direction from the user's eye E toward the display 100, the electronic device 10 may provide the wide field of view to the user. The light beam that has passed through each lens 410 may reach the user's eye E via the optical path correcting lens 500 and each pinhole 310.

Therefore, based on the radiation direction, a third spacing d3 between the lenses 410 adjacent to each other may be substantially equal to a fourth spacing d4 between the pinholes 310 adjacent to each other or greater than that by a minimum range, and a second difference Δ2 between the third spacing d3 and the fourth spacing d4 may be substantially zero or at least smaller than the first difference Δ1. Accordingly, there is no need to increase the planar area (i.e., the planar area based on the X direction and the Y direction) of the display panel 100 in order to provide the wide field of view to the user, which may contribute to reducing the overall size of the electronic device 10.

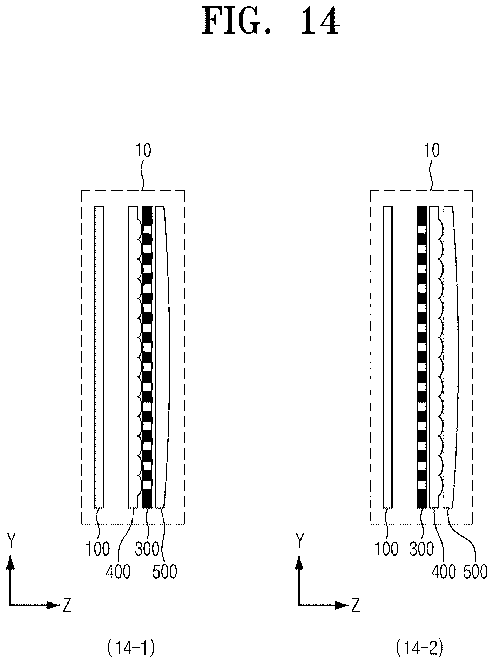

It was described in FIG. 12 that the lens array 400, the optical path correcting lens 500, and the pinhole array 300 are sequentially arranged in the direction from the display panel 100 to the user's eye E (that is, the Z direction). However, they do not necessarily have to be arranged in this order. This will be described with further reference to FIG. 14. FIG. 14 is a side cross-sectional view of an electronic device according to an aspect of the present disclosure.

As shown in (14-1) in FIG. 14, the pinhole array 300 may be disposed between the lens array 400 and the optical path correcting lens 500. For example, the lens array 400, the pinhole array 300, and the optical path correcting lens 500 may be sequentially arranged in the direction from the display panel 100 to the user's eye E (i.e., the Z direction). Alternatively, although not shown, the optical path correcting lens 500, the pinhole array 300, and the lens array 400 may be sequentially arranged in the direction from the display panel 100 to the user's eye E (i.e., the Z direction).

Alternatively, as shown in (14-2) in FIG. 14, the pinhole array 300 may be disposed between the display panel and the lens array 400. For example, the pinhole array 300, the lens array 400, and the optical path correcting lens 500 may be sequentially arranged in the direction from the display panel 100 to the user's eye E (i.e., the Z direction). Alternatively, although not shown, the pinhole array 300, the optical path correcting lens 500, and the lens array 400 may be sequentially arranged in the direction from the display panel 100 to the user's eye E.

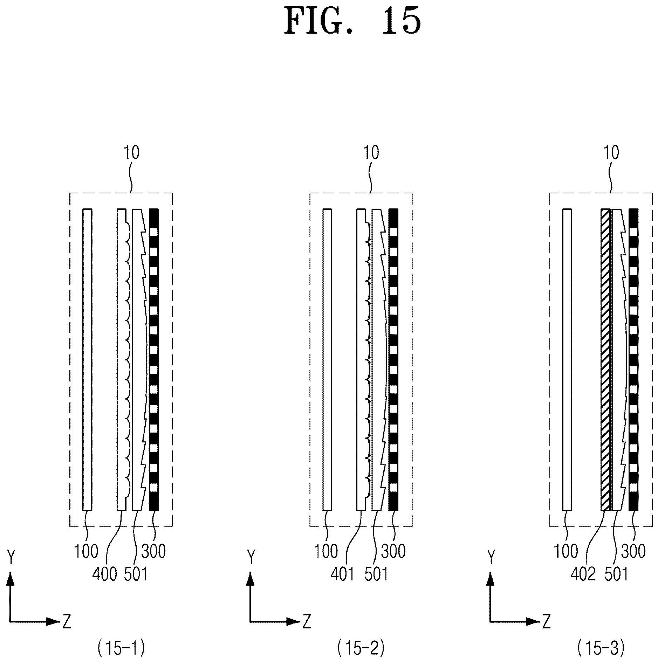

In one example, the optical path correcting lens 500 may be the Fresnel lens, not the general lens. This will be described with reference to FIG. 15. FIG. 15 is a side cross-sectional view of an electronic device according to an aspect of the present disclosure.

As shown in (15-1) in FIG. 15, instead of the optical path correcting lens 500, which is the general lens, an optical path correcting lens 501, which is the Fresnel lens may be used.

In this case, as shown in (15-2) in FIG. 15, instead of the lens array 400 in which the general lens is used as the lens 410, the lens array 401 in which the Fresnel lens is used as the lens 410 may be used.

Alternatively, as shown in (15-3) in FIG. 15, instead of the lens array 400 in which the general lens is used as the lens 410, the lens array 402 in which the diffractive element serving as the lens such as the differential optical element (DOE), the holographic optical element (HOE), or the meta lens is used as the lens 410 may be used.

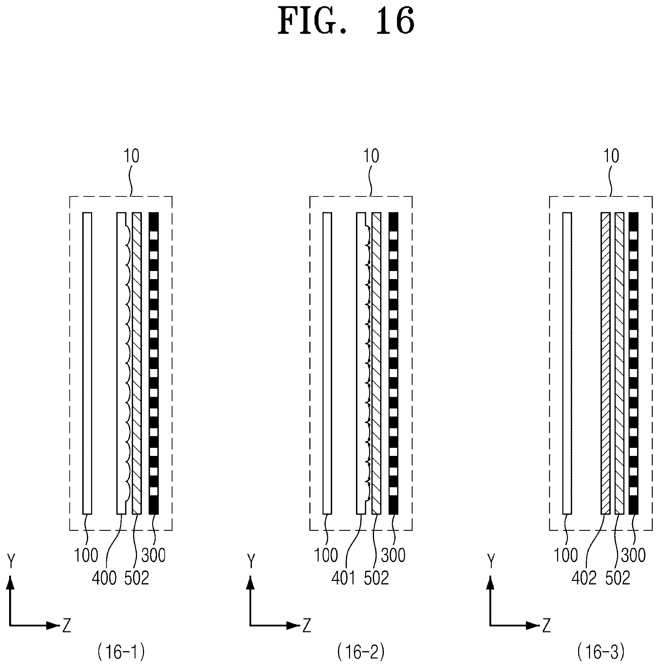

In addition, the optical path correcting lens 500 may be the diffractive element rather than the general lens. This will be described with reference to FIG. 16. FIG. 16 is a side cross-sectional view of an electronic device according to an aspect of the present disclosure.

As shown in (16-1) in FIG. 16, instead of the optical path correcting lens 500, which is the general lens, an optical path correcting lens 502, which is the diffractive element serving as the lens such as the differential optical element (DOE), the holographic optical element (HOE), or the meta lens may be used.

In this case, as shown in (16-2) in FIG. 16, instead of the lens array 400 in which the general lens is used as the lens 410, the lens array 401 in which the Fresnel lens is used as the lens 410 may be used.

Alternatively, as shown in (16-3) in FIG. 16, instead of the lens array 400 in which the general lens is used as the lens 410, the lens array 402 in which the diffractive element serving as the lens such as the differential optical element (DOE), the holographic optical element (HOE), or the meta lens is used as the lens 410 may be used.

The path correcting lens 500, which is the general lens, the Fresnel lens, or the the diffractive element, may be understood as a kind of optical element.

In FIGS. 15 and 16, the arrangement positions of the lens array 400, 401, and 402, the optical path correcting lens 501 and 502, and the pinhole array 300 may be changed, which is as described above with reference to FIG. 14.

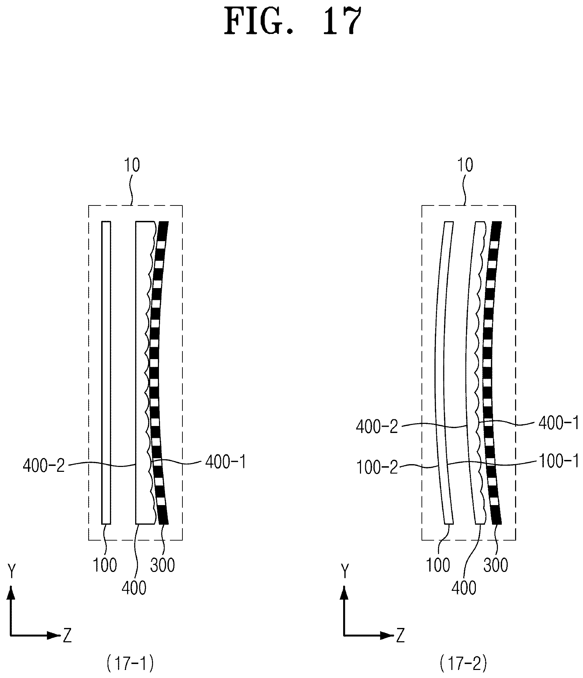

Hereinafter, an electronic device capable of reducing the planar area of the display panel 100 while providing the wide field of view to the user without the optical path correcting lens 500 will be described with reference to FIG. 17. FIG. 17 is a side cross-sectional view of an electronic device according to an aspect of the present disclosure.

As shown in FIG. 17, the electronic device 10 may include the display panel 100, the pinhole array 300, and the lens array 400.

As shown in (17-1) in FIG. 17, when viewing a side cross-section of the electronic display 10, both lateral edges of the cross-section of the pinhole array 300 may be formed as curves that are bent in the direction of the user's eyes E. That is, the pinhole array 300 may be formed as a curved surface.

Further, when viewing the side cross-section of the electronic display 10, a first lateral cross-sectional edge 400-1 of the lens array 400 adjacent to the pinhole array 300 may be generally formed as a curve with a curvature corresponding to a curvature of the pinhole array 300, and a second lateral cross-sectional edge 400-2 of the lens array 400 adjacent to the display panel 100 may be formed as a straight line. Accordingly, a first surface of the lens array 400 facing the pinhole array 300 may be formed as a curved surface conforming to the pinhole array 300, and a second surface of the lens array 400 facing the display panel 100 may be formed as a flat surface or a curved surface conforming to a light output surface of the display panel 100.

In one example, both of the first lateral cross-sectional edge 400-1 and the second lateral cross-sectional edge 400-2 of the lens array 400 may be formed as curves.

That is, as shown in (17-2) in FIG. 17, when viewing the side cross-section of the electronic display 10, both lateral edges of the cross-section of the pinhole array 300 may be formed as curves that are bent in the direction of the user's eyes E. That is, the pinhole array 300 may be formed as a curved surface.

In addition, when viewing the side cross-section of the electronic display 10, the first lateral cross-sectional edge 400-1 of the lens array 400 adjacent to the pinhole array 300 may be generally formed as the curve with the curvature corresponding to the curvature of the pinhole array 300, and the second lateral cross-sectional edge 400-2 of the lens array 400 adjacent to the display panel 100 may also be formed as the curve with the curvature corresponding to the curvature of the pinhole array 300. Accordingly, both the first surface of the lens array 400 facing the pinhole array 300 and the second surface of the lens array 400 facing the display panel 100 may be formed as curved surfaces conforming to the pinhole array 300.

In addition, when viewing the side cross-section of the electronic display 10, one lateral cross-sectional edge 100-1 or both lateral cross-sectional edges 100-1 and 100-2 of the display panel 100 may be formed as a curve or curves with a curvature corresponding to the curvature of the pinhole array 300. That is, the display panel 100 may be formed as a curved surface.

With such a curvature configuration, the electronic device 10 may reduce the planar area of the display panel 100 while providing the wide field of view to the user without the optical path correcting lens 500.

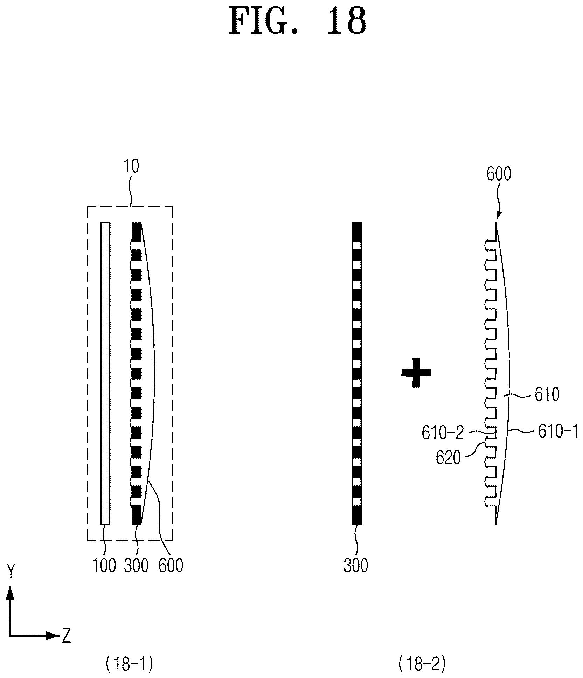

In one example, the lens array 400 and the optical path correcting lens 500 may be integrally formed. This will be described with further reference to FIG. 18. FIG. 18 is a side cross-sectional view of an electronic device according to an aspect of the present disclosure.

Referring to (18-1) in FIG. 18, the electronic device 10 may include the display panel 100, the pinhole array 300, and an optical path correcting lens array 600.

Because the display 100 and the pinhole array 300 are the same as described above, a detailed description thereof will be omitted.

As shown in (18-2) in FIG. 18, the optical path correcting lens array 600 may include a lens body 610 having a shape identical or similar to that of the optical path correcting lens 500 shown in FIG. 12, and a plurality of (protruding) lenses 620 protruding from the lens body 610. The lens body 610 may serve as the optical path correcting lens 500 described above, and the plurality of lenses 620 may serve as the plurality of lenses of the lens array 400 described above.

It may be understood that the optical path correcting lens array 600 is formed by integrally forming the lens array 400 and the optical path correcting lens 500.

The lens body 610 may include a first surface 610-1 facing the user's eyes and a second surface 610-2 facing the display panel 100. The first surface 610-1 may have a first curvature for serving as the optical path correcting lens 500, 501, and 502 described above. The second surface 610 may form a plane or a curved surface to be in close contact with the pinhole array 300.

The plurality of protruding lenses 620 may be formed to protrude from the second surface 610 toward the display panel 100.

A surface of a distal end of each protruding lens 620 may have a second curvature for serving as each lens 410 of the lens array 400.

The pinhole array 300 and the optical path correcting lens array 600 may be coupled to each other such that the second surface 610 is in close contact with the pinhole array 300 while each protruding lens 620 is located in each pinhole of the pinhole array 300. Each protruding lens 620 may be inserted into each pinhole.

The electronic device 10 including the pinhole array 300 and the optical path correcting lens array 600 as described above may be more advantageous in terms of the thickness thereof.

It will be appreciated that a Fresnel discontinuous curvature or the diffractive element may be used instead of at least one of the first curvature and the second curvature.

It is illustrated in FIG. 18 that each protruding lens and each pinhole correspond to each other in the 1:1 ratio. However, the present disclosure is not limited thereto. In one example, the protruding lenses and the pinholes may correspond to each other in a 1:N or N:1 ratio.

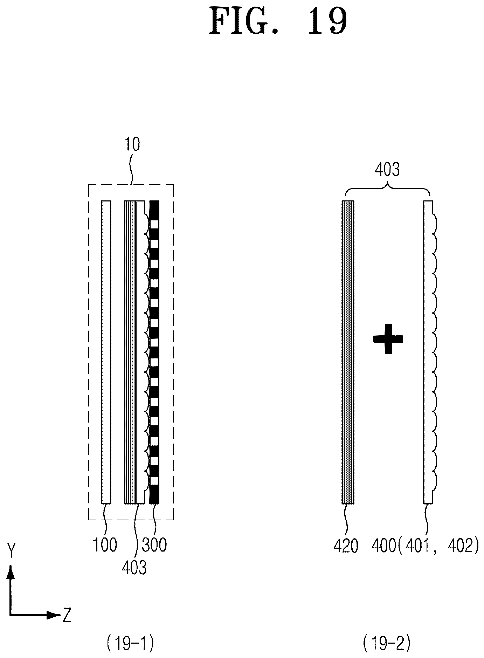

In one example, a lens array including a pancake lens layer for further reducing the thickness of the electronic device 10 may be used. This will be described with further reference to FIG. 19. FIG. 19 is a side cross-sectional view of an electronic device according to an aspect of the present disclosure.

As shown in (19-1) in FIG. 19, the electronic device 10 may include the display panel 100, a lens array 403 including the pancake lens layer, and the pinhole array 300. Although not shown, the electronic device 10 may further include the optical path correcting lens 500, 501, and 502. Among both surfaces of the lens array 403, the pancake lens layer may be formed on one surface facing the display panel.

Because the display panel 100 and the pinhole array 300 are the same as described above, a detailed description thereof will be omitted.

As shown in (19-2) in FIG. 19, the lens array 403 may be constituted by a combination of the lens array 400, 401, and 402 in the various shapes described above with a pancake lens layer 420 deposited on one surface of the lens array 403 facing the display panel 100.

The pancake lens layer 420 serves to extend the optical path of the light beam by allowing the light beam irradiated thereto to be reflected therein in a reciprocating manner and then to be transmit therethrough using a polarization principle.

The thickness of the electronic device 10 may be reduced as much as the optical path of the light beam extends.

The above detailed description should not be construed in all respects restrictively but should be considered illustrative. The scope of the present disclosure should be determined by reasonable interpretation of the appended claims, and all changes within the equivalent scope of the present disclosure are included in the scope of the present disclosure.

## Claims

1. An electronic device comprising:
a display panel configured to display an image;
a pinhole array comprising a plurality of pinholes; and
a lens array comprising a plurality of optical elements respectively corresponding to the plurality of pinholes and for enlarging the image passing through each pinhole.

2. The electronic device of claim 1, wherein the plurality of pinholes and the plurality of optical elements correspond to each other in a ratio of 1:1, N:1, or 1:N.

3. The electronic device of claim 1, wherein each of the plurality of optical elements is equipped as one of a general lens, a Fresnel lens, and a diffractive element.

4. The electronic device of claim 1, further comprising an optical path correcting lens for correcting an optical path of the image toward a user's eye in a horizontal direction.

5. The electronic device of claim 4, wherein the optical path correcting lens is equipped as one of a general lens, a Fresnel lens, and a diffractive element.

6. The electronic device of claim 4, wherein the optical path correcting lens is disposed between the lens array and the pinhole array.

7. The electronic device of claim 4, wherein the pinhole array is disposed between the lens array and the optical path correcting lens.

8. The electronic device of claim 4, wherein the lens array is disposed between the pinhole array and the optical path correcting lens.

9. The electronic device of claim 1, wherein the pinhole array and one surface of the lens array facing the pinhole array are formed as curved surfaces.

10. The electronic device of claim 9, wherein an opposite surface of the lens array is formed as a plane.

11. The electronic device of claim 4, wherein the lens array and the optical path correcting lens are integrated to constitute an optical path correcting lens array.

12. The electronic device of claim 11, wherein the optical path correcting lens array comprises a lens body and the plurality of optical elements protruding from one surface of the lens body,
wherein each of the plurality of protruding optical elements is inserted into each one of the plurality of pinholes.

13. The electronic device of claim 12, wherein an opposite surface of the lens body forms a curved surface.

14. The electronic device of claim 1, wherein the lens array comprises a pancake lens layer configured to allow a light beam of the image to be reflected therein in a reciprocating manner and to be transmitted therethrough using a polarization principle.

15. The electronic device of claim 13, wherein, among both surfaces of the lens array, the pancake lens layer is disposed on one surface facing the display panel.

16. The electronic device of claim 1, wherein each of the plurality of pinholes has a circular or polygonal planar shape.

17. The electronic device of claim 15, wherein a separation distance between pinholes adjacent to each other increases from a center toward a periphery of the pinhole array.

18. The electronic device of claim 1, wherein the plurality of pinholes are distributed in one of a lattice pattern, a diamond pattern, and a circular pattern.

19. The electronic device of claim 1, wherein an aperture of each of the plurality of pinholes is equal to or greater than 400µm.

20. The electronic device of claim 19, wherein a separation distance between the pinhole array and the display panel is smaller than 40mm.
